Europäisches Patentamt

European Patent Office

Office européen des brevets

(19)

(11) Publication number: **0 049 984**
**B1**

(12)  **EUROPEAN PATENT SPECIFICATION**

(45) Date of publication of patent specification: **08.01.86**

(51) Int. Cl.⁴: **B 60 J 7/22**

(21) Application number: **81304588.7**

(22) Date of filing: **05.10.81**

(54)  **Draught deflector for vehicles.**

(30) Priority: **14.10.80 GB 8033103**

(43) Date of publication of application:
**21.04.82 Bulletin 82/16**

(45) Publication of the grant of the patent:
**08.01.86 Bulletin 86/02**

(84) Designated Contracting States:
**DE FR GB IT**

(56) References cited:
**DE-C-1 124 373**
**GB-A-1 070 018**
**GB-A-1 353 150**

(73) Proprietor: **Britax Weathershields Limited**
**180 Sherlock Street**
**Birmingham B5 7EH (GB)**

(72) Inventor: **Fisher, Sidney Edward**
**645 Fox Hollies Road**
**Hall Green Birmingham B28 9DW (GB)**
Inventor: **Betteridge, Timothy David**
**8 Chartergate Croft**
**Erdington Birmingham B24 0NQ (GB)**

(74) Representative: **Hollinghurst, Antony**
**Britax Division (Patents) Kingsham Road**
**Chichester West Sussex PO19 2UG (GB)**

Courier Press, Leamington Spa, England.

## Description

This invention relates to draught deflectors for passenger vehicles having a longitudinal opening in the roof adapted to be closed by a sliding or folding panel.

Deflectors for this purpose commonly consist of a transverse member adapted to be hinged to a stationary cross member at the front end of the roof opening so as to be movable between an inoperative position below the closed roof panel and an operative position in which it extends rearwardly and upwardly from its hinges to deflect air flow upwardly over the windscreen and front part of the car away from the roof opening.

Patent specifications GB—A—1070018 and GB—A—1353150 disclose draught deflectors of this type comprising a rigid panel attached to said stationary transverse member by three hinges, one at each end and one at the centre. Because on most vehicles, the stationary transverse member has a substantial curvature in the transverse direction of the vehicle, the connection between the panel and the centre hinge is arranged to permit relative sliding movement in a direction perpendicular to the hinge axis as the deflector is moved between its operative and inoperative positions. However, the curvature of the transverse member makes it difficult to ensure that there is no gap between the hinge edge of the deflector and the adjacent vehicle roof. Any such gap can result in the production of undesirable wind noise.

According to the invention, in a draught deflector for an opening roof in a motor vehicle comprising a panel extending across the front of the vehicle roof opening and three spaced hinges, one part of each hinge being adapted for connection to a stationary transverse member extending across the front of the roof opening and the other part of each hinge being connected to the panel which has a rigid panel portion with an exposed edge forming the trailing edge of the deflector as known from the patent specification GB—A—1353150. To avoid the aforesaid wind noise the panel has a flexible panel portion overlying part of the rigid panel portion and being movable relative to the rigid panel portion in a direction perpendicular to said trailing edge, said other part of at least one of the three hinges being connected to the flexible panel portion.

Preferably the panel portions are interconnected so as to inhibit relative movement at locations adjacent to the end hinges.

An embodiment of the invention will now be described by way of example, with reference to the accompanying drawings, in which:

Figure 1 is a perspective view of the front of an opening vehicle roof fitted with a draught deflector in accordance with the invention,

Figure 2 is a fragmentary plan view from below of the deflector shown in Figure 1, and

Figures 3, 4 and 5 are cross-sectional views taken on the lines 3—3, 4—4 and 5—5 respectively in Figures 1 and 2.

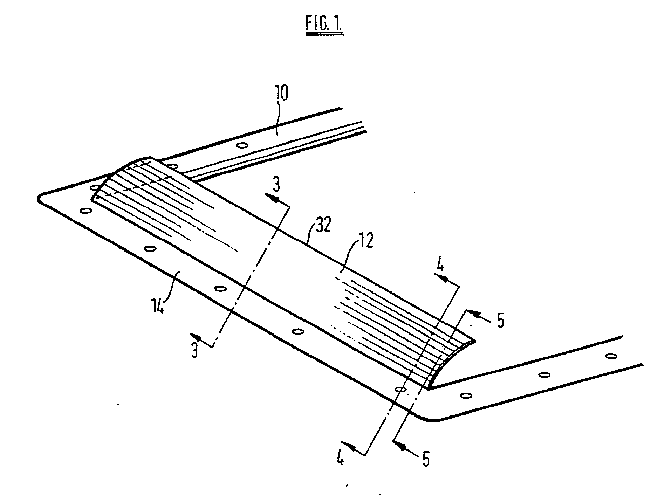

Referring to Figure 1, an opening roof for a motor vehicle includes a frame 10 bounding the aperture in the vehicle roof. A draught deflector 12 in accordance with the invention is mounted on the front transverse member 14 of the frame 10.

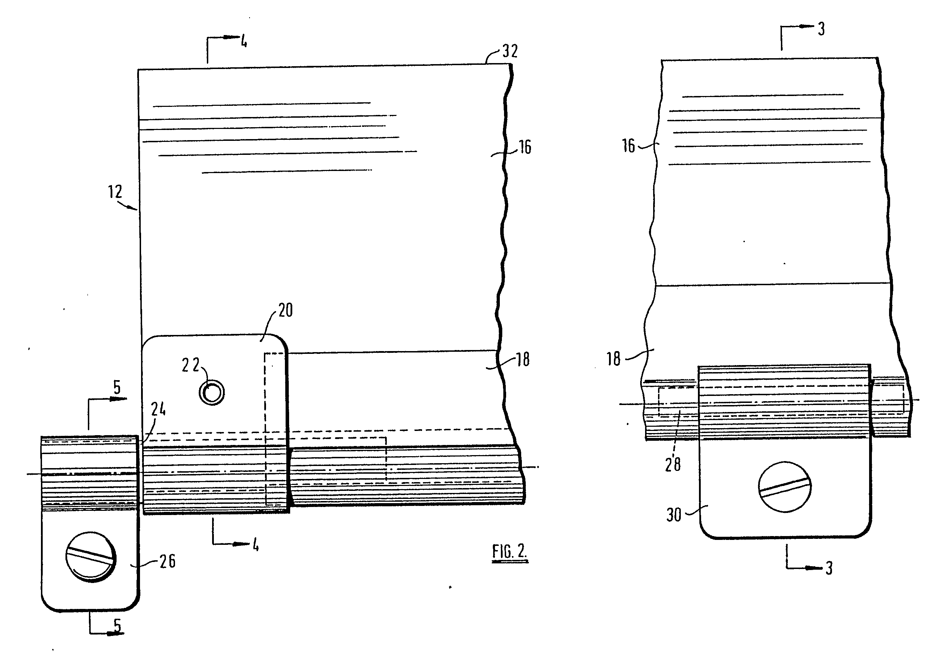

Turning now to Figures 2 to 5, it should be understood that the deflector is symmetrical about the section line 3—3 in Figure 2 so that the components illustrated in Figures 4 and 5 have counterparts at the other end of the deflector. The deflector 12 consists of a panel 16 and U-shaped member 18 which is slightly shorter than the panel 16 and has each of its ends embraced by one part 20 of a respective end hinge. Each hinge part 20 being connected to the panel 16 by a respective rivet 22. The hinge parts 20 inhibit movement of the ends of the flexible member 18 relative to the panel 16 but the central region thereof is capable of limited relative movement, as will be explained hereinafter.

Each hinge part 20 contains a hole for receiving a squared end of a respective hinge pin 24. A rounded end of each hinge pin 24 is received in a corresponding hinge part 26 which in turn, is adapted to be secured to the transverse frame member 14 (Figures 1 and 5).

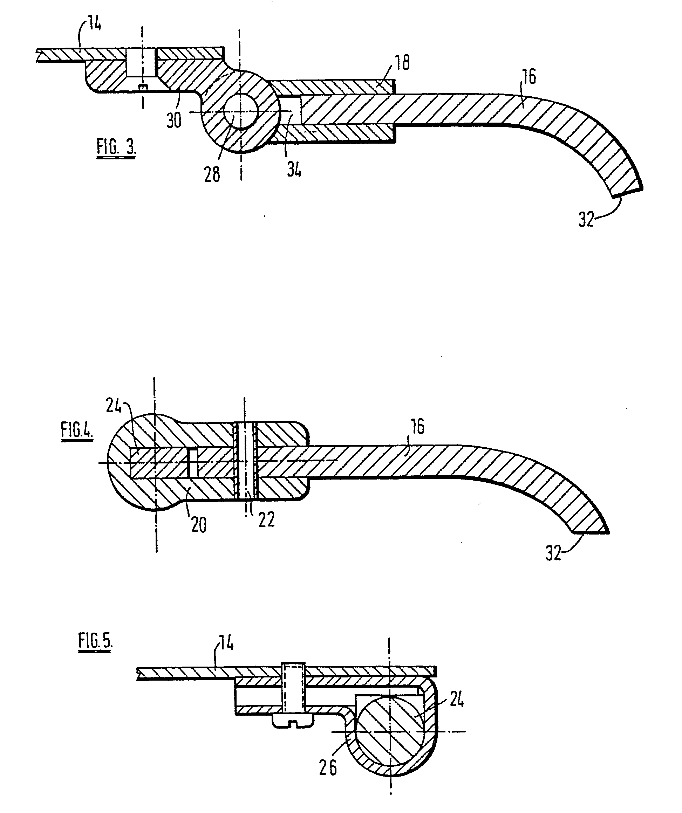

Referring particularly to Figures 2 and 3, the U-shaped member 18 has a central cut-out which is bridged by a hinge pin 28 carrying a hinge part 30 which is also secured to the transverse member 14. As can clearly be seen from Figure 2, the hinge pin 28 is not in alignment with the hinge pin 24, this being due to the above mentioned curvature of the vehicle roof.

In use, the deflector can pivot from the deployed position shown in Figure 1 to a position in which its trailing edge 32 projects forwardly towards the windscreen adjacent to the head lining within the car. As a result of the misalignment of the pivot pins of the various hinges, the edge of the panel 16 nearest to the hinges moves inwardly and outwardly between the limbs of the U-shaped member 18, such movement being accommodated by the clearance space 34 (Figure 3).

The hinge parts 26 of the end hinges may be formed of spring steel configured so as to grip their respective hinge pins 24 so as to hold the deflector 12 in any preset position. If it is desired to make the operation of the wind deflector bistable between its deployed and non-deployed positions, parts of the pivot pins 24 may be formed with cam profiles which will engage by respective leaf springs or spring-loaded plungers.

## Claims

1. A draught deflector for an opening roof in a motor vehicle comprising a panel (12) extending across the front of the vehicle roof opening and three space hinges, one part (26, 30) of each hinge being adapted for connection to a stationary transverse member (14) extending across the front of the roof opening and the other part (24, 28) of each hinge being connected to the panel (12) which has a rigid panel portion (16) with an exposed edge (32) forming the trailing edge of the deflector, characterised in that the panel (12) has a flexible panel portion (18) overlying the part of the rigid panel portion (16) and being movable relative to the rigid panel portion (16) in a direction perpendicular to said trailing edge (32), said other part (28) of at least one of the three hinges being connected only to the flexible panel portion (18).

2. A draught deflector according to claim 1, characterised by means (22, 24) interconnecting the rigid panel portion (16) and the flexible panel portion (18) adjacent to the ends thereof, so as to inhibit relative movement therebetween.

3. A draught deflector according to claim 1 or 2, characterised in that the flexible panel portion (18) is of U-shaped cross-section with the limbs of the U-shape embracing the edge of the rigid panel portion (16) opposite to the trailing edge (32) thereof.

**Revendications**

1. Pare-vent pour toit ouvrant dans un véhicule automobile comprenant un panneau (12) s'étendant transversalement à l'avant de l'ouverture de toit du véhicule et trois charnières espacées, une partie (26, 30) de chaque charnière étant agencée pour la liaison à un élément transversal fixe (14) s'étendant à l'avant de l'ouverture de toit et l'autre partie (24, 28) de chaque charnière étant reliée au panneau (12) qui comprend une partie de panneau rigide (16) avec un bord exposé (32) formant le bord arrière du pare-vent, caractérisé en ce que le panneau (12) comporte une partie de panneau souple (18) recouvrant la partie de panneau rigide (16) et qui est mobile par rapport à ladite partie de panneau rigide (16) dans une direction perpendiculaire audit bord postérieur (32), ladite autre partie (28) d'au moins une des trois charnières étant reliée seulement à la partie de panneau souple (18).

2. Pare-vent selon la revendication 1, caractérisé par des moyens (22, 24) reliant la partie de panneau rigide (16) et la partie de panneau souple (18) près de leurs extrémités afin d'empêcher un mouvement relatif entre elles.

3. Pare-vent selon l'une des revendications 1 ou 2, caractérisé en ce que la partie de panneau souple (18) présente une section transversale en forme de U, les branches du U entourant le bord de la partie de panneau rigide (16) opposée à son bord postérieur (32).

**Patentansprüche**

1. Windabweiser für ein Schiebedach in einem Kraftfahrzeug, umfassend eine Leiste (12), die sich über die Vorderseite des KFZ-Schiebedaches erstreckt und drei voneinander beabstandete Scharniere, wobei ein Teil (26, 30) eines jeden Scharniers zu einer Verbindung mit einem festen Transversalglied (14) ausgebildet ist, das sich quer über die Vorderseite des Schiebedaches erstreckt und wobei der andere Teil (24, 28) eines jeden Scharniers mit der Leiste (12) verbunden ist, die einen steifen Leistenabschnitt (16) mit einer offenliegenden Kante (32) umfaßt, welche die Hinterkante des Windabweisers bildet, dadurch gekennzeichnet, daß die Leiste (12) einen flexiblen Leistenabschnitt (18) aufweist, der auf einem Teil des steifen Leistenabschnittes (16) liegt und zu diesem steifen Leistenabschnitt (16) senkrecht zur Hinterkante (32) beweglich ist, wobei der andere Teil (28) mindestens eines der drei Scharniere nur mit dem flexiblen Leistenabschnitt (18) verbunden ist.

2. Windabweiser nach Anspruch 1, gekennzeichnet durch Mittel (22, 24), welche den steifen Leistenabschnitt (16) und den flexiblen Leistenabschnitt (18) an ihren Enden verbinden, so daß sie eine Relativbewegung zwischen den Teilen verhindern.

3. Windabweiser nach einem der Ansprüche 1 oder 2, dadurch gekennzeichnet, daß der flexible Leistenabschnitt (18) einen U-förmigen Querschnitt aufweist, wobei die Schenkel des U diejenige Kante des steifen Leistenabschnittes (16) umfassen, welche seiner Hinterkante (32) gegenüberliegt.

FIG. 1.

1

0 049 984

FIG. 2.

2

FIG. 3.

FIG.4.

FIG.5.